# EUROPEAN PATENT SPECIFICATION

(11) **EP 4 150 936 B1**
(45) Date of publication and mention of the grant of the patent: **03.07.2024**
(21) Application number: 21723305.5
(22) Date of filing: 10.05.2021
(51) Int. Cl.: H04W 4/80, A24F 40/65

(54) **AN AEROSOL GENERATING DEVICE WITH A WIRELESS COMMUNICATION INTERFACE**
AEROSOLERZEUGUNGSVORRICHTUNG MIT DRAHTLOSKOMMUNIKATIONSSCHNITTSTELLE
DISPOSITIF DE GÉNÉRATION D'AÉROSOL DOTÉ D'UNE INTERFACE DE COMMUNICATION SANS FIL

(30) Priority: 15.05.2020 EP 20175055
(43) Date of publication of application: 22.03.2023
(73) Proprietor: JT International SA, 1202 Geneva (CH)
(72) Inventor: YAMAGUCHI, Akira, 1207 Geneva (CH); BOUCHUIGUIR, Layth, Sliman, 1293 Bellevue (CH)
(74) Representative: Gill Jennings & Every LLP
(86) International application number: PCT/EP2021/062349
(87) International publication number: WO 2021/228775

(56) References cited:
- EP-A1- 3 120 720
- WO-A1-2017/205692
- WO-A2-2014/195805
- CA-C- 2 912 821
- US-A1- 2015 181 945
- US-A1- 2018 160 733

## Description

### FIELD OF INVENTION

The invention relates to aerosol generating devices. In particular, the invention relates to aerosol generating devices with a wireless communication interface.

### BACKGROUND TO THE INVENTION

There is a demand for aerosol generating devices with enhanced security features which prevent unauthorised users, such as children or thieves, from using the device. However, such security features can negatively affect the ease of use of the device. It is an object of the present invention to address these competing demands.

In US 2015/181945 A1, an electronic cigarette capable of communicating with an external device is disclosed.

In CA 2912821 C, a container for an elongate electronic nicotine delivery system is disclosed.

In EP 3120720 A1, a method for preventing an unauthorised user from accidentally puffing an electronic cigarette is disclosed.

In WO 2014/195805 A2, enhancements for a controller for improved operations and control for the e-Cig with a consumer device are disclosed.

In WO 2017/205692 A1, vaporizer systems, which can include a device in communication with a vaporizer, are disclosed.

### SUMMARY OF INVENTION

According to an aspect of the invention, there is provided an aerosol generating device configured to use an aerosol forming substance to generate an aerosol for inhalation by a user, according to claim 1.

In this way, the device is able to perform a user verification check while the user is preparing to provide the consumable to the aerosol generating device. This offers an advantage of improved security because the device cannot be used for aerosol generation until a security condition is satisfied, which is that a wireless link with a user electronic device is available. This security advantage, however, does not compromise the utility of the device because the wireless communication interface performs the user verification check while the user is preparing the device to receive the consumable. This means that the device can be ready to generate an aerosol as soon as the user has manipulated the device and provided the device with the consumable comprising an aerosol forming substance. In some examples, the wireless communication interface may be configured to perform a single or brief wireless search for a user electronic device, when triggered. This can advantageously reduce battery strain by avoiding continuous and unnecessary wireless searching for the user electronic device. The sensor may be configured to trigger the wireless communication interface in response to detecting the action. In other examples, the controller may be configured to trigger the wireless communication interface in response to receiving a signal from the sensor which indicates that the sensor has detected the action.

The aerosol generating device comprises a chamber for receiving the consumable, wherein the sensor is configured to detect when the lid is in one of the first position or the second position, thereby enabling the sensor to detect when the chamber is open or closed. In this way, the sensor can detect when the user intends to supply the aerosol generating device with a consumable. In one example, the sensor may comprise a photosensitive diode configured to detect background light which enters the chamber when the chamber is open. The chamber may be an elongate cylindrical chamber configured to receive a rod comprising tobacco. Alternatively, the chamber may be configured to receive a cartridge, wherein the cartridge comprises a reservoir for containing aerosol forming fluid. In a further example, the chamber may function as a reservoir for containing an aerosol forming fluid, wherein the chamber can be opened or closed by puncturing a perforable member which seals the fluid within the chamber. In such an embodiment, the sensor may be configured to detect when the seal has been punctured.

The aerosol generating device comprises a lid, which may be embodied as a slider, configured to be moved from a first position, in which the chamber is closed by the lid, to a second position, in which the chamber is open. In this way, the chamber can be covered when the device is not in use to protect the chamber from contaminants such as dust. In one example, the chamber may also function as a heating oven when heating is provided to an aerosol forming substance inserted into the chamber. In such an example, it is particularly desirable to provide a slider to protect the chamber from impurities as these impurities could end up in an airflow to be inhaled by the user. The skilled person would appreciate that in other examples the lid may be provided as a hinge and a latch, wherein the hinge can be opened or closed by engaging or releasing the latch, respectively. In such an example, the hinge may be opened in order to access the chamber. In another example, the lid may be provided as a removable cap configured to cover the chamber.

The sensor may comprise a Hall-effect sensor and a permanent magnet, wherein one of the permanent magnet and the Hall-effect sensor are disposed within the lid. The sensor may comprise electric contacts configured to make or break contact when the lid is moved between the first and second positions. The sensor is preferably a contactless sensor. The skilled person would appreciate that any other suitable proximity sensors could be used to detect a user performed action. In another example, the sensor may comprise a touch sensor configured to detect a user finger on the lid.

Preferably, the controller is configured to enable the generation of an aerosol for a predetermined time period when the wireless communication interface has established that a wireless link with the previously paired user electronic device is available. In this way, the safety of the device can be improved because the generation of an aerosol is not enabled indefinitely if the user encounters a delay after the aerosol generation has been enabled. This can avoid unwanted users from using the device during the delay.

Preferably, the aerosol generating device further comprises an input device configured to be activated by the user to initiate the generation of an aerosol. In this way, the user can provide the device with the aerosol generating substance and initiate the generation of an aerosol by activating the input device at their convenience. In one example, the input device may be a button. In another example, the aerosol generating device may be an unmarked touch-sensitive button which is not visibly distinguished from an outer casing of the device. Such an example may be advantageous because it makes it more difficult for a child to use the aerosol generating device.

Preferably, the controller is configured to detect an activation of the input device and, if the generation of an aerosol is not already enabled, trigger, in response to detecting the activation, the wireless communication interface to search for a wireless link with the previously paired user electronic device. In this way, a second user verification can be performed if the initial user verification was unsuccessful. By enabling the user to control when the second user verification is carried out, undue battery strain can be avoided because the user can activate the input device when they expect the verification to succeed. In some examples, the wireless communication interface may be configured to conduct a single, or brief, wireless search when the user activates the input device. In such cases, the battery life of the device can be improved because continuous wireless searching is avoided. For example, the user can prompt the device to initiate the search by activating the input device after they have turned on their user electronic device, thus avoiding undue wireless searching.

Preferably, the aerosol generating device further comprises an indicator configured to indicate to the user a status of the aerosol generating device. In one example, the indicator may be an LED light source. The skilled person would appreciate that other indicators may be used, alternatively or in addition, such as a vibration unit. The indicator may indicate to the user if a wireless link with the user electronic device has been found. This can provide a visual cue to the user that vaping can begin, thus increasing the usability of the device. The indicator may inform the user that a wireless link with the user electronic device is not available.

Preferably, the wireless communication interface is a Bluetooth interface. In this way, the compatibility of the device can be increased through use of a common wireless interface. Alternatively or in addition, the wireless communication interface may comprise a near field communication, or NFC, interface.

Preferably, the sensor is configured to detect when the lid is moved towards the first position, and wherein, in response to the sensor detecting the lid has moved towards the first position, the wireless communication interface is disabled. In this way, the battery of the aerosol generating device can be better conserved because the sensor can detect when the user has closed or is closing the lid, meaning that the user does not intend to start or continue vaping, and disable wireless functionality in response. Thus, the aerosol generating device can disable the wireless safety features as soon as possible to prevent undue battery strain. In some cases, disabling the wireless functionality in this way can halt unnecessary wireless searching quicker than disabling the wireless functionality using a timeout timer. The wireless communication interface may be partially disabled. For example, an ongoing wireless search for a user electronic device may be cancelled. Alternatively, the wireless communication interface may be disabled entirely to further conserve battery power. The sensor may be configured to detect when the lid has reached the first position. Alternatively or in addition, the sensor may be configured to detect when the lid has moved closer to the first position. For example, the sensor may be configured to measure a physical quantity, wherein an increase or decrease of the physical quantity may indicate to the sensor that the lid is being closed. In this case, the sensor may be a Hall-effect sensor configured to measure a magnetic field from a magnet in the lid, and an increasing or decreasing magnetic field may indicate the lid is being moved towards the first position by the user. The wireless communication interface may be disabled by the controller, e.g., in response to the controller receiving a control signal from the sensor. Alternatively, the sensor may trigger disablement of the wireless communication interface directly.

Preferably, the chamber is configured for receiving a consumable in the form of a rod comprising tobacco, and the aerosol generating device further comprises a heater configured to heat the consumable within the chamber. In this way, the aerosol generating device may function as a heat-not-burn device, wherein the chamber and the heater form an oven for heating the consumable to a temperature below the combustion temperature of tobacco. In such a configuration, triggering the wireless communication interface in response to the detection of a manipulation of the lid by a user is particularly advantageous. This is because consumables comprising tobacco typically require replacement every vaping session, in contrast to a configuration utilising a replaceable cartridge, which tends to last for several vaping sessions before needing replaced. Thus, the wireless security functionality can be automatically triggered each vaping session without specific input from the user, just by opening the lid. The verification of the user's electronic device can then be completed by the time the user has inserted a consumable into the chamber, meaning the device can be ready to use immediately, each vaping session.

According to another an aspect of the invention, there is provided a method of operating an aerosol generating device according to claim 9.

According to another an aspect of the invention, there is provided a non-transitory computer readable medium according to claim 10.

### BREIF DESCRIPTION OF THE DRAWINGS

Embodiments of the invention are now described, by way of example, with reference to the drawings, in which:
Figure 1 is a perspective view of an aerosol generating device in an embodiment of the invention in a first configuration;
Figure 2 is a perspective view of the aerosol generating device of Figure 1 in a second configuration;
Figure 3A is a cross-sectional schematic diagram of the lid of the aerosol generating device shown in Figure 1;
Figure 3B is a cross-sectional schematic diagram of the lid of the aerosol generating device shown in Figure 2;
Figure 4 is a schematic block diagram of a control system in an aerosol generating device in an embodiment of the invention; and
Figure 5 is a flowchart showing a control sequence in an embodiment of the invention.

### DETAILED DESCRIPTION OF THE DRAWINGS

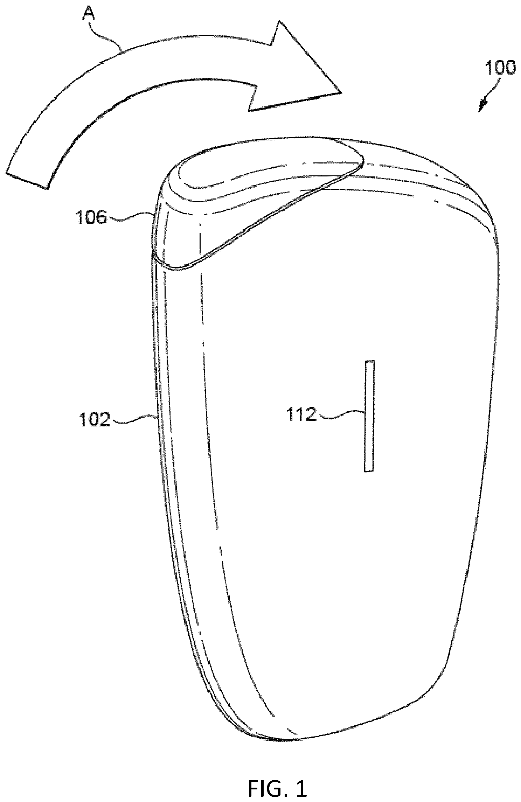

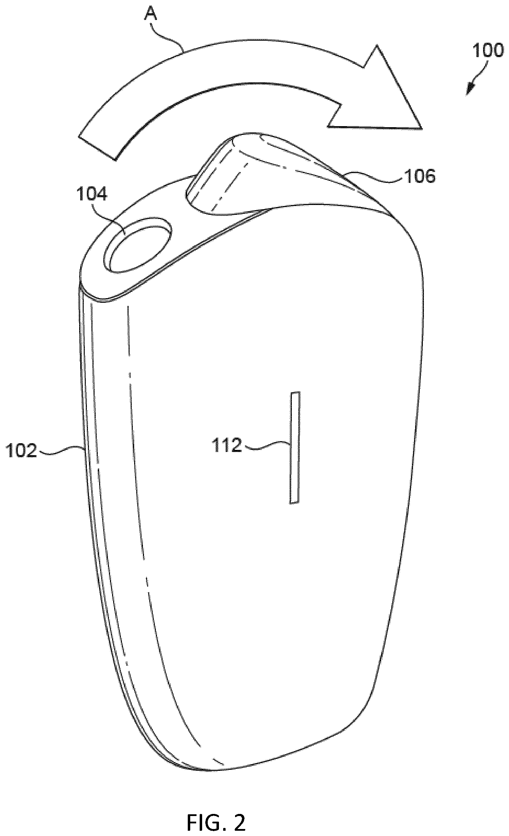

Figures 1 and 2 show perspective views of an aerosol generating device 100 in first and second configurations, respectively.

An aerosol generating device 100 is provided and comprises a housing 102 which houses the internal components of the device. A chamber 104 is provided for receiving an aerosol forming substance. A slider 106 is provided on a top surface of the aerosol generating device and is configured to cover the chamber 104 and expose, or open, the chamber 104 by sliding along the direction of the arrow (A). An LED indicator 112 is provided on the outer surface of the casing 102 for indicating a status of the device.

The housing 102 may comprise any suitable material known in the art, such as plastic or metal. In the example embodiment shown in Figures 1 and 2, the chamber 104 is a cylindrical cavity configured to receive an aerosol forming substance in the form of a cylindrical rod comprising tobacco. One end of the rod may comprise a porous filter element. A person skilled in the art would appreciate that the chamber 104 may alternatively be configured to receive an aerosol forming substance in other forms, such as a cartridge comprising a reservoir containing an aerosol forming fluid. In other examples, the chamber 104 may be replaced with or act as a reservoir for containing an aerosol forming fluid configured to be refilled by an external reservoir.

The slider 106 is provided partly as a means to protect the chamber 104 from dust or other impurities. In other embodiments, the chamber 104 may be protected from dust by a removable cap. In other embodiments, the chamber 104 may be opened or closed using a hinge mechanism which enables a lid of the aerosol generating device 100 to be pivoted about the hinge to open or close the chamber 104. In other embodiments, the slider 106 may be actioned by a twisting or otherwise rotational motion to open and close the chamber 104. It is considered that the slider 106 could be, in an alternative embodiment, any component which can be actioned or manipulated by the user to enable the aerosol generating device to receive an aerosol forming substance.

The LED indicator 112 may be used in conjunction with alternative indicators capable of conveying information to the user. In one example, the aerosol generating device 100 may comprise a vibration unit which vibrates to indicate a status of the device in addition or alternatively to the LED indicator 112. As shown in Figures 1 and 2, the LED indicator 112 comprises an elongate strip of LEDs. In other embodiments, the indicator may be configured as a circular strip of LEDs or a circular array of LEDs.

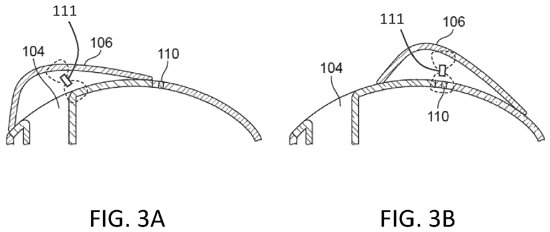

Figures 3A and 3B show a cross-sectional schematic diagram of the lid of the aerosol generating device 100 in the first and second configurations, respectively, as shown in Figures 1 and 2, respectively.

A Hall-effect sensor 110 is provided for detecting a permanent magnet 111 within the slider 106 to determine the position of the slider 106 relative to the housing 102. The Hall-effect sensor 110 is positioned on the housing 102 and is configured to detect a permanent magnet 111 within the slider 106. The skilled person would appreciate that other sensors could be used alternatively or in addition to the Hall-effect sensor 110 and the permanent magnet 111. In another example, a photosensitive diode and an LED emitter may be provided on the housing 102, and the slider 106 may comprise a reflective portion on the face of the slider 106 which faces the housing 102 which reflects the light from the LED back towards the photosensitive diode. In another example, the sensor may comprise electric contacts located on the slider 106 and the housing 102 which make contact when the slider 106 is in a first or second position. Preferably, the sensor is a contactless sensor.

In some embodiments, the aerosol generating device 100 may comprise a plurality of sensors, each configured to detect one or more sensing elements positioned in or on the slider 106. This may reduce the likelihood of falsely detecting the position of the slider 106. Including a plurality of sensors may also enable the position of the slider 106 to be determined more accurately and through a greater range of movement. Furthermore, including a plurality of sensors provides redundancy between the sensors, in the case of a fault in one of the sensors. In other examples, the permanent magnet 111 may instead be positioned on the housing 102 and the Hall-effect sensor 110 may instead be positioned on the slider 106.

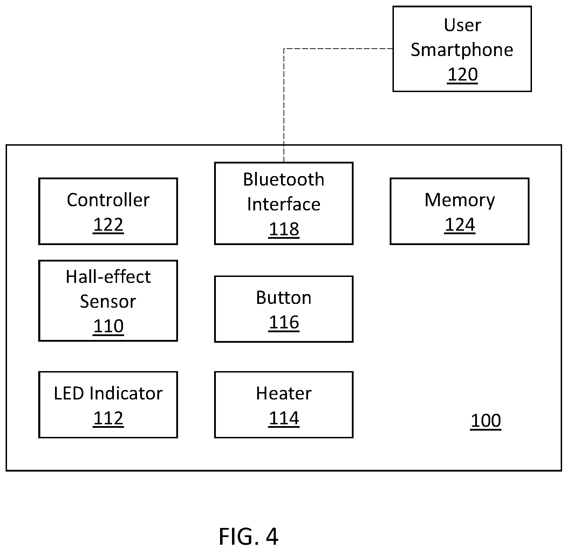

Figure 4 is a schematic block diagram of a control system in an aerosol generating device in an embodiment of the invention.

A heater 114 is provided for heating an aerosol generating substance which is inserted into the chamber 104 to generate an aerosol. The heater 114 may be any kind of heating mechanism known in the art, such as a resistive heater, an induction heater, or a convection heater. In the example embodiment shown in Figures 1, 2, 3A and 3B, the heater 114 is positioned appropriately within the aerosol generating device 100 to provide heating to the chamber 104. The heater 114 is configured to heat a rod comprising tobacco when it is inserted into the chamber 104. Thus, the chamber 104 and the heater 114 form an oven for heating the rod. In use, the tobacco rod can be heated to a temperature below that of combustion and held at the temperature for an extended period. The heated tobacco emits smoke particles which form an aerosol when mixed with air which is drawn through the air inlet of the chamber 104. The heater 114 may comprise a heating element which forms the cylindrical inner walls of the chamber 104. Alternatively, the heater 114 may at least partially surround the walls of the chamber 104. In other example embodiments, such as those wherein the chamber 104 is configured to receive a cartridge comprising a reservoir containing an aerosol forming substrate, the heater 114 may be configured in other ways. For example, the heater 114 may be configured as a resistive element positioned about a wick in fluid connection with the reservoir, as is known in the art.

A button 116 disposed on the outer surface of the housing 102 is provided for detecting a user input. The button 116 may be replaced or used in conjunction with any other input device configured to receive an input from the user and relay the input to other components. In one example, the button 116 may be configured as an actuatable push button on the housing 102. In another example, the button 116 may comprise a touch-sensitive portion on the housing 102 configured to detect a user finger on the touch-sensitive portion. In such examples, the touch-sensitive portion may purposely lack an identifier which identifies the portion of the housing 102 which is touch-sensitive. This may help to prevent children from using the device. In other example embodiments, the button 116 may be included alongside other input devices, such as a shake sensor configured to detect acceleration of the device provided by the user.

A Bluetooth interface 118 is provided for communicating wirelessly with a user electronic device, such as a user smartphone 120. The skilled person would understand that the Bluetooth interface 118 may alternatively be any other wireless protocol interface, such as a near field communication, or NFC, interface. The skilled person would also understand that in other examples, the aerosol generating device 100 could be used in conjunction with other user electronic devices in place of or in addition to the user smartphone 120, such as laptops, wireless key fobs, smart watches, or any other user owned electronic device capable of wireless communication.

A controller 122 is provided for controlling the operations of the electronic components of the device. The controller 122 is configured to be in electric communication with other electronic components of the aerosol generating device 100, i.e. the electronic components of the aerosol generating device 100 shown in Figure 4. The controller 122 comprises one or more processors configured to execute instructions which manage operations of the device. The controller 122 may be provided as a chip positioned interior to the housing 102 of the aerosol generating device 100.

A memory 124 is provided for storing identifiers of user electronic devices such as the user smartphone 120. The memory 124 may also be provided as a chip located interior to the housing 102.

Returning to Figures 3A and 3B, the slider 106 is movably attached to the housing 102 by a rail (not shown). The rail may comprise a slot in the housing 102 which is elongate in the direction of the arrow (A). A portion of the slider 106 is positioned through the elongate slot to enable the slider 106 to move back and forth along the direction of the arrow (A) and to inhibit the slider 106 from separating from the housing 102. In use, the user can push the slider 106 from a first position as shown in Figures 1 and 3A in which the chamber 104 is covered, or closed, to a second position as shown in Figures 2 and 3B in which the chamber 104 is exposed, or open.

The Hall-effect sensor 110 is configured to detect the magnetic field, as shown in dashed lines in Figures 3A and 3B, of the permanent magnet 111 positioned within the slider 106. As the user pushes the slider 106 towards the second position, the permanent magnet 111 comes into closer proximity with the Hall-effect sensor 110 and the permanent magnet 111 increases the magnetic field strength around the Hall-effect sensor 110. Once the magnetic field strength increases above a threshold value, the Hall-effect sensor 110 determines that the slider 106 is in the second position. The Hall-effect sensor 110 is configured to send a control signal to the controller 122 when it determines that the slider 106 is in the second position. This indicates to the controller 122 that the user intends to insert a rod comprising tobacco and begin generating an aerosol, or, in other words, intends to begin a vaping session, or "vaping".

In other example embodiments, the Hall-effect sensor 110 may be positioned to detect the slider 106 in the first position. In such cases, the Hall-effect sensor 110 may send a signal to the controller 122 when a magnetic field is detected which is below a threshold value - indicating that the slider 106 has been pushed away from the Hall-effect sensor 110 into the second position. In such a configuration, the slider 106 does not have to traverse the distance between the first and the second positions to be detected. Thus, such a configuration may be advantageous because the sensor can detect movement of the slider 106 as soon as the slider 106 begins to move from the first position. However, the positioning of the Hall-effect sensor as shown in Figures 3A and 3B may be preferable because the slider 106 must traverse the full displacement from the first position to the second position. Thus, the Hall-effect sensor 110 is less likely to detect an accidental, partial displacement of the slider 106 which could occur in the user's pocket or bag. This can help to prevent accidental wireless searching which could cause undue strain on the battery of the device.

In other example embodiments where the slider 106 is replaced with an alternative actionable component, the Hall-effect sensor 110 can be repositioned with respect to the alternative component. For example, if a removable cap is used instead to open or close the chamber 104, the permanent magnet 111 may be positioned on or within the cap, and the Hall-effect sensor 110 may be positioned on the housing 102. In another example where the chamber 104 is opened and closed using a hinge mechanism, the Hall-effect sensor 110 and the permanent magnet 111 may be configured such that they are brought into close proximity when the hinge is closed.

In an example use of the invention, the user can open the slider 106 to insert the consumable rod comprising tobacco into the chamber 104. As soon as the Hall-effect sensor 110 detects that the slider 106 is in the second, or open, position, the controller 122 instructs the Bluetooth interface 118 to search for a wireless link with the user smartphone 120 in order to authenticate the user as an authorised user of the aerosol generating device 100. The authentication occurs while the user is preparing to insert and inserting the rod, thus avoiding the need for the user to wait for authentication after the rod has been inserted. Once the Bluetooth interface 118 has received identity credentials (e.g., a MAC address) from the user smartphone 120, the controller 122 enables the generation of an aerosol. The user can then press the button 116 to initiate the heater 114 when they have inserted the rod and are ready to start vaping. In response, the controller 122 instructs the heater 114 to begin heating the rod, which generates an aerosol in the chamber 104. The air inlet which is fluidically connected to the chamber 104 enables the user to inhale the generated aerosol through the end of the rod which protrudes from the chamber 104.

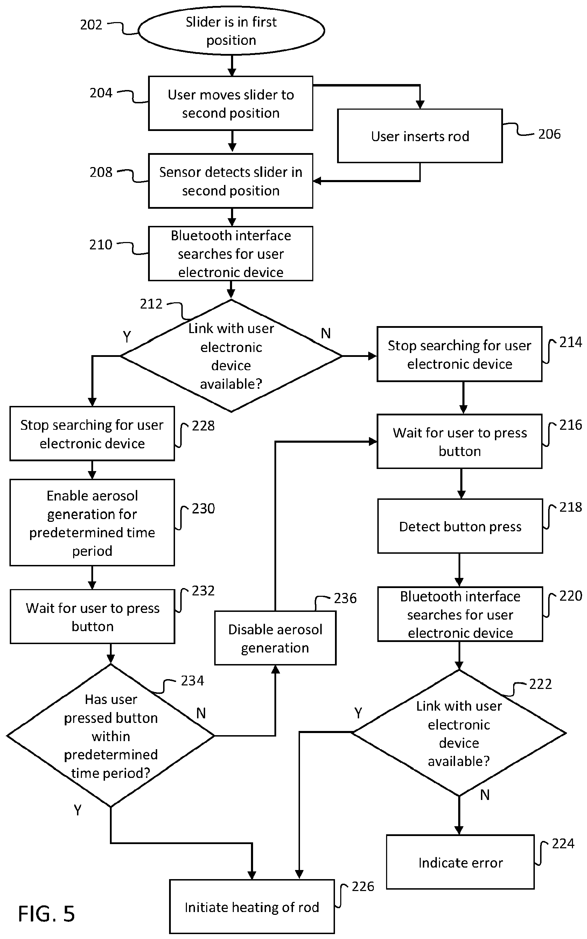

Figure 5 is a flowchart showing a control sequence in an embodiment of the invention. Example usages of the embodiment of the invention of Figures 1-4 will now be described in greater detail with reference to Figure 5.

At step 202, the slider 106 is in the first position and the chamber 104 is closed. In this state, the aerosol generating device 100 may be in an inactive state.

At step 204, the user moves the slider 106 to the second position, exposing the chamber 104 and thus enabling the user to insert the rod comprising tobacco into the chamber 104. Moving the slider 106 into the second position may "wake up" the device, or allow it become active.

At step 206, the user inserts the rod into the chamber 104. When the rod is fully inserted into the chamber 104, an end of the rod protrudes from the aerosol generating device 100. The user can later inhale the generated aerosol by sucking or inhaling through the exposed end of the rod.

At step 208, the Hall-effect sensor 110 detects that the slider 106 is in the second position and sends a control signal to the controller 122. At step 210, the controller 122 receives the control signal from the Hall-effect sensor 110 and, in response, instructs the Bluetooth interface 118 to search for a wireless link with the user smartphone 120. Establishing that a link is available with the user smartphone 120 generally means that the aerosol generating device 100 is within a predetermined physical distance of the user smartphone 120, which means that the owner of the smartphone can be presumed to be the person operating the device. In general, it takes time for user to open the slider 106 and to insert the rod into the chamber 104, and this time can advantageously be used to search for the wireless link with the user smartphone 120. Thus, step 206 and step 210 occur simultaneously. In this way, the wireless searching of step 210 can be performed while the user is inserting the rod at step 206, providing a more convenient user experience.

Prior to use of the device, the user can perform a pairing operation between the user smartphone 120 and the aerosol generating device 100, carried out via the Bluetooth interface 118. During the pairing operation, the user smartphone 120 may transmit an identifier, such as MAC address which is unique to the user smartphone 120, to the aerosol generating device 100. The user smartphone 120 may be required to have an application installed thereon which is configured to interface with the aerosol generating device 100 to perform the pairing operation. The MAC address can then be stored in the memory 124 of the aerosol generating device 100 for future use in authentication. In some examples, the application may only be required to perform an initial pairing operation and may not be required to enable the generation of an aerosol. In such cases, the user smartphone 120 may transmit the MAC address without using the application, using a Bluetooth interface. In some examples, aerosol generating device 100 may be associated with an account, and the pairing operation may be protected by an account login, thus preventing thieves of the aerosol generating device 100 from pairing the device to their own electronic devices. In some example embodiments, the user can pair multiple user electronic devices with the aerosol generating device 100.

Returning to step 210 in greater detail, the controller 122 instructs the Bluetooth interface 118 to search for the user smartphone 120. The Bluetooth interface 118 may then wirelessly request the MAC addresses of all Bluetooth enabled devices in range of the aerosol generating device 100. In some examples, at step 210 the controller 112 simply enables the Bluetooth function of the Bluetooth interface 118. When the Bluetooth function is enabled, the Bluetooth interface 118 can receive advertising data from the user smartphone 120 and any other Bluetooth enabled devices which are in wireless range. Advertising data are regularly transmitted packets of data emitted from a Bluetooth interface of a device which includes the identity (e.g. MAC address) of the device. By utilising advertising data, the Bluetooth interface 118 does not need to establish a two-way connection with the user smartphone 120, but instead can infer that a wireless link is available with the user smartphone 120 when the advertising data from the user smartphone 120 is received. Utilising advertising data may reduce the power consumption of the Bluetooth interface 118 at least partly because the Bluetooth interface 118 does not need to transmit data to establish that a link is available.

In some examples, a direct wireless link between the aerosol generating device 100 and the user smartphone 120 may not be required. In such cases, the MAC address of the user smartphone 120 may be transmitted via intermediate wireless enabled devices which are in wireless range of the aerosol generating device 100.

At step 210, the Bluetooth interface 118 is activated for a predetermined detection period (e.g., 1 min) to detect Bluetooth enabled devices nearby and after the predetermined detection period expired, the Bluetooth interface 118 will stop detecting or be disabled from detecting regardless of whether a paired phone is found or not, as described in reference to step 214 and step 228.

At step 212, the controller checks the MAC addresses received at step 210 against the MAC address of the user smartphone 120 stored in the memory 124 from a previous pair operation. If the controller 122 determines that a paired device's MAC address has not been received within the predetermined detection period, then the controller 122 determines that the user is potentially not an authorised user and proceeds to step 214. In practice, the MAC address of the user smartphone 120 may not be received for reasons such as: the user smartphone 120 is not in wireless range of the aerosol generating device 100; the user smartphone 120 does not have its Bluetooth capabilities turned on; or an unauthorised user who is not in possession of a paired electronic device has attempted to use the aerosol generating device 100.

At step 214, the controller 122 instructs the Bluetooth interface 116 to stop wireless searching if it cannot detect a previously paired electronic device within the predetermined detection period. This helps to prevent undue battery usage caused by continuous wireless searching. In one embodiment, the aerosol generation device will provide haptic feedback to the user to notify failure of security check or authentication.

At step 216, the controller 122 waits for the user to activate the button 116. In one example use, the user may press the button 116 after they have realised the wireless capabilities of the user smartphone 120 were turned off and subsequently turned them back on. The user can then press the button 116 once they have enabled the Bluetooth capabilities of the user smartphone 120 and inserted the rod into the chamber 104.

At step 218, the user presses the button 116 and the controller 122 receives a control signal from the button 116 indicating that the user intends to start vaping.

At step 220, in response to receiving the control signal from the button 116, the controller 122 instructs the Bluetooth interface 118 to search for a wireless link with the user smartphone 120, as described with reference to step 210.

At step 222, the controller 122 checks the identity credentials of the Bluetooth enabled devices in range of the aerosol generating device 100, as described with reference to step 212. If the MAC address of the user smartphone 120 is not received at this step, then the controller 122 may instruct the LED indicator 112 or, in other example embodiments, a vibration unit, to indicate the presence of an error, at step 224. In some examples, the control sequence may return to step 216 after indicating the presence of an error at step 224. This step may be reached because of a fault in the system, such as a faulty component, or this step may be reached because, for example, the user smartphone 120 is not in Bluetooth range of the aerosol generating device 100. The LED indicator 112 may be configured to convey which kind of fault has prevented the generation of an aerosol from being enabled.

If instead, at step 222, the controller 122 does receive the MAC address of the user smartphone 120, the controller 122 determines that the user smartphone 120 is nearby and therefore the current user is an authorised user of the device. Additionally, because the user has pressed the button 116 at step 218, the controller 122 determines that the user intends to initiate vaping. At step 226, the controller 122 instructs the heater 114 to initiate heating of the rod, which was inserted into the cavity 104 at step 206.

The heated rod generates an aerosol within the chamber 104. As the user inhales through the protruding end of the rod, air is drawn through the air inlet which is fluidically connected to the chamber 104, thus carrying the generated aerosol to the user to enjoy.

Returning to step 212, the controller 122 may alternatively receive the MAC address of the user smartphone 120 at this step, and successfully match the received MAC address to the MAC address stored in memory 124. Upon determining a match, the controller 122 infers that the user is an authenticated user.

At step 228 the controller 122 instructs the Bluetooth interface 118 to stop searching for wireless devices.

At step 230, the controller 122 enables the generation of aerosol for a predetermined time period (e.g. 1 minute or 30 seconds). While the generation of an aerosol is enabled, the user can initiate the heating of the rod by pressing the button 116. If the user presses the button 116 after the predetermined time period has elapsed, the controller 122 does not instruct the heater 114 to heat the rod. Thus, the heating of the tobacco rod can only be initiated while the generation of an aerosol is enabled. Once the heating is initiated, the heater 114 is configured to heat the rod for the duration of the vaping session. That is, the heating is not disabled by the lapsing of the predetermined time period. In one example, the vaping session may continue until the user returns the slider 106 to the first position. The vaping session may have a maximum time limit, after which the heater 114 is disabled to increase the safety of the device.

The use of the predetermined time period can increase the safety of the device because the heating cannot be initiated indefinitely after the generation of an aerosol is enabled. For example, if the user experiences a five minute delay between enabling the generation of an aerosol and pressing the button 116, a child user cannot pick up the aerosol generating device 100 and initiate heating during the latter four minutes of the delay.

At step 232, the controller 122 waits for the user to press the button 116, thus indicating that they are ready to initiate vaping.

At step 234, the controller 122 determines if the user has pressed the button 116 within the predetermined time period to initiate heating of the rod. Step 234 may occur in response to the user pressing the button 116 or in response to the predetermined time period elapsing. If the user has pressed the button 116 within the predetermined time period, then the controller 122 instructs the heater 114 to initiate heating of the rod, at step 226. In this case, the controller 122 instructs the LED indicator 112 to provide indication of heating status. For example, the LED indicator 112 may be configured to indicate the progress of the heating towards a maximum temperature by turning on a proportionate amount of the LEDs of the LED indicator 112.

Otherwise, if the user does not press the button 116 within the predetermined time period, then the controller disables the generation of an aerosol at step 236. While the generation of an aerosol is disabled, pressing the button 116 does not result in the controller 122 instructing the heater 114 to heat the rod. The generation of an aerosol is disabled by default.

Once the generation of an aerosol has been disabled, the controller 122 returns or moves to step 216. The user must then perform an additional verification attempt which is successful, as described with reference to steps 216-226, before the heating of the rod can be initiated.

The control sequence may be cancelled or reset at any time by the user by moving the slider 106 to the first position. When the Hall-effect sensor 110 determines that the slider 106 is no longer in the second position, a control signal may be sent to the controller 122, informing the controller 122 that the user intends to stop or abandon vaping. The Hall-effect sensor 110 may infer this by detecting a magnetic field below a threshold value as the slider 106 is returned to the first position, thus moving the permanent magnet 111 further from the Hall-effect sensor 110. The controller 122 may then disable the heater 114 or power supply to the heater 114, and disable the generation of an aerosol, and return to step 202.

The presence of an error is indicated at step 224, however in other examples other operational statuses may be indicated after certain steps. For example, after the generation of an aerosol has been enabled, the controller 122 may instruct the LED indicator 112 to indicate to the user that the device is ready to generate an aerosol. Similarly, at step 234, the controller 122 may also instruct the LED indicator 112 to indicate to the user that they have failed to press the button 116 within the predetermined time period.

In some embodiments, the aerosol generating device 100 is configured to disable the Bluetooth interface 118 when the Hall-effect sensor 110 detects movement of the slider 106 towards the first position. This may occur when the user has finished vaping, or when the user has elected not to start a vaping session after initially moving the slider 106 to the second position, thereby triggering a wireless search. As the user pushes the slider 106 towards the first position, the permanent magnet 111 is pushed further from the Hall-effect sensor 110 and the magnetic field strength around the Hall-effect sensor 110 is decreased. Once the magnetic field strength decreases below a threshold value, the Hall-effect sensor 110 determines that the slider 106 is in the first position. Alternatively, the Hall-effect sensor 110 may be configured to determine when the magnetic field is decreasing to infer when the slider 106 is being pushed to close the chamber 104. The Hall-effect sensor 110 may be configured to send a control signal to the controller 122 when it determines that the slider 106 is in or moving towards the first position. This indicates to the controller 122 either that the user no longer intends to begin a vaping session, or that they have finished vaping. In either case, it can be desirable to disable the Bluetooth interface 118 promptly to minimise the amount of battery energy used on unnecessary wireless searching or other wireless functionality. Thus, in these example embodiments, when the controller 122 determines the slider 106 is in the first position, the controller 122 disables the Bluetooth interface 118. The Bluetooth interface 118 may be disabled entirely, wherein all wireless functionality is inhibited. Alternatively, the wireless functionality may be partially disabled, wherein, for example, any ongoing wireless search operations are halted and cancelled.

## Claims

1. An aerosol generating device (100) configured to use an aerosol forming substance to generate an aerosol for inhalation by a user, comprising:
a wireless communication interface (118) configured to communicate wirelessly with a previously paired user electronic device (120);
a controller (122) configured to enable the generation of an aerosol when the wireless communication interface has established through a search, based on the receipt of a MAC address of the previously paired user electronic device, that a wireless link with the previously paired user electronic device is available;
a chamber (104) for receiving a consumable comprising the aerosol forming substance;
a lid (106) configured to be moved from a first position, in which the chamber is closed by the lid, to a second position, in which the chamber is open; and
a sensor (110) configured to detect an action performed by the user involving the manipulation of the lid to enable the aerosol generating device to receive the consumable,
wherein, the wireless communication interface is configured to, in response to detecting the action, be triggered to search for a wireless link with the previously paired user electronic device, and
wherein the sensor is configured to detect when the lid is in one of the first position or the second position.

2. The aerosol generating device of any of the preceding claims, wherein the controller is configured to enable the generation of an aerosol for a predetermined time period when the wireless communication interface has established that a wireless link with the previously paired user electronic device is available.

3. The aerosol generating device of any of the preceding clams, further comprising an input device (116) configured to be activated by the user to initiate the generation of an aerosol.

4. The aerosol generating device of claim 3, wherein the controller is configured to detect an activation of the input device and, if the generation of an aerosol is not already enabled, trigger, in response to detecting the activation, the wireless communication interface to search for a wireless link with the previously paired user electronic device.

5. The aerosol generating device of any of the preceding claims, further comprising an indicator (112) configured to indicate to the user a status of the aerosol generating device.

6. The aerosol generating device of any of the preceding claims, wherein the wireless communication interface is a Bluetooth interface.

7. The aerosol generating device of any of the preceding claims, wherein the sensor is configured to detect when the lid is moved towards the first position, and wherein, in response to the sensor detecting the lid has moved towards the first position, the wireless communication interface is disabled.

8. The aerosol generating device of any of the preceding claims, wherein the chamber is configured for receiving a consumable in the form of a rod comprising tobacco, and wherein the aerosol generating device further comprises a heater configured to heat the consumable within the chamber.

9. A method of operating an aerosol generating device to use an aerosol forming substance to generate an aerosol for inhalation by a user, comprising the steps of:
detecting an action performed by the user involving the manipulation of a lid (106) of the aerosol generating device to enable the aerosol generating device to receive a consumable comprising the aerosol forming substance; and
triggering, in response to detecting the action, the wireless communication interface to search for a wireless link with a previously paired user electronic device;
enabling (230) the generation of the aerosol when a wireless communication interface (118) has established through the search, based on the receipt of a MAC address of a previously paired user electronic device (120), that a wireless link with the previously paired user electronic device is available; $
wherein the detecting an action comprises detecting whether the lid is in one of a first position or a second position.

10. A non-transitory computer readable medium comprising executable instructions that, when executed by a processor on an aerosol generating device (100), cause the aerosol generating device to perform steps comprising:
detecting an action performed by a user involving the manipulation of a lid (106) of the aerosol generating device to enable the aerosol generating device to receive a consumable comprising the aerosol forming substance; and
triggering, in response to detecting the action, the wireless communication interface to search for a wireless link with a previously paired user electronic device;
enabling (230) the generation of the aerosol when a wireless communication interface (118) has established through the search, based on the receipt of a MAC address of a previously paired user electronic device (120), that a wireless link with the previously paired user electronic device is available;
wherein the detecting an action comprises detecting whether the lid is in one of a first position or a second position.

## Patentansprüche

1. Aerosolerzeugungsvorrichtung (100), die so konfiguriert ist, dass sie eine aerosolbildende Substanz verwendet, um ein Aerosol zur Inhalation durch einen Benutzer zu erzeugen, umfassend:
Eine drahtlose Kommunikationsschnittstelle (118), die so konfiguriert ist, dass sie drahtlos mit einem zuvor gepaarten elektronischen Gerät (120) kommuniziert;
eine Steuerung (122), die so konfiguriert ist, dass sie die Erzeugung eines Aerosols ermöglicht, wenn die drahtlose Kommunikationsschnittstelle, durch eine Suche, auf Basis des Empfangs einer MAC-Adresse des zuvor gepaarten elektronischen Benutzergeräts, festgestellt hat, dass ein drahtloses Link, mit dem zuvor gepaarten elektronischen Benutzergerät, verfügbar ist;
eine Kammer (104) zur Aufnahme eines Verbrauchsmaterials, das die aerosolbildende Substanz umfasst;
einen Deckel (106), der so konfiguriert ist, dass er sich aus einer ersten Position, in welcher die Kammer geschlossen ist, in eine zweite Position bewegen lässt, in welcher die Kammer offen ist; und
einen Sensor (110), der so konfiguriert ist, dass er eine Aktion seitens des Benutzers erkennt, welche die Manipulation des Deckels involviert, damit der aerosolbildenden Vorrichtung ermöglicht wird, das Verbrauchsmaterial zu empfangen,
wobei die drahtlose Kommunikationsschnittstelle so konfiguriert ist, dass sie, als Reaktion auf das Erkennen der Aktion, getriggert wird, nach einem drahtlosen Link mit dem zuvor gepaarten elektronischen Benutzergerät zu suchen, und
wobei der Sensor so konfiguriert ist, dass er erkennt, wenn sich der Deckel in einer der ersten Position oder der zweiten Position befindet.

2. Aerosolerzeugungsvorrichtung nach einem der vorhergehenden Ansprüche, wobei die Steuerung so konfiguriert ist, dass sie die Erzeugung eines Aerosols für eine vorbestimmte Zeit ermöglicht, wenn die drahtlose Kommunikationsschnittstelle festgestellt hat, dass ein drahtloses Link mit dem zuvor gepaarten elektronischen Benutzergerät verfügbar ist.

3. Aerosolerzeugungsvorrichtung nach einem der vorhergehenden Ansprüche, die außerdem eine Eingabevorrichtung (116) umfasst, die konfiguriert ist, vom Benutzer aktiviert zu werden, um die Erzeugung eines Aerosols zu initiieren.

4. Aerosolerzeugungsvorrichtung nach Anspruch 3, wobei die Steuerung konfiguriert ist, eine Aktivierung der Eingabevorrichtung zu erkennen und, falls die Erzeugung eines Aerosols nicht bereits aktiviert ist, als Reaktion auf das Erkennen der Aktivierung, Triggern der drahtlosen Kommunikationsschnittstelle nach einem drahtlosen Link mit dem zuvor gepaarten elektronischen Benutzergerät zu suchen.

5. Aerosolerzeugungsvorrichtung nach einem der vorhergehenden Ansprüche, die außerdem eine Anzeige (112) umfasst, die konfiguriert ist, dem Benutzer einen Status der Aerosolerzeugungsvorrichtung anzuzeigen.

6. Aerosolerzeugungsvorrichtung nach einem der vorhergehenden Ansprüche, wobei die drahtlose Kommunikationsschnittstelle eine Bluetooth-Schnittstelle ist.

7. Aerosolerzeugungsvorrichtung nach einem der vorhergehenden Ansprüche, wobei der Sensor konfiguriert ist, zu erkennen, wenn der Deckel in Richtung der ersten Position bewegt wird, und wobei als Reaktion darauf, dass der Sensor erkennt, dass sich der Deckel in Richtung der ersten Position bewegt hat, die drahtlose Kommunikationsschnittstelle deaktiviert wird.

8. Aerosolerzeugungsvorrichtung nach einem der vorhergehenden Ansprüche, wobei die Kammer zur Aufnahme eines Verbrauchsmaterials in Form einer Tabak enthaltenden Stange konfiguriert ist, und wobei die Aerosolerzeugungsvorrichtung außerdem ein Heizgerät umfasst, das konfiguriert ist, das Verbrauchsmaterial innerhalb der Kammer zu erhitzen.

9. Verfahren zum Betreiben einer Aerosolerzeugungsvorrichtung zur Verwendung einer aerosolbildenden Substanz, um ein Aerosol zur Inhalation durch einen Benutzer zu erzeugen, folgende Schritte umfassend:
Erkennen einer vom Benutzer durchgeführten Aktion, welche die Manipulation eines Deckels (106) der Aerosolerzeugungsvorrichtung involviert, um der Aerosolerzeugungsvorrichtung zu ermöglichen, ein Verbrauchsmaterial aufzunehmen, das die aerosolbildende Substanz umfasst; und
Triggern, als Reaktion auf das Erkennen der Aktion, dass die drahtlose Kommunikationsschnittstelle, nach einem drahtlosen Link, mit einem zuvor gepaarten elektronischen Benutzergerät sucht;
Ermöglichen (230) der Erzeugung des Aerosols, wenn eine drahtlose Kommunikationsschnittstelle (118) durch die Suche, auf Basis des Empfangs einer MAC-Adresse eines zuvor gepaarten elektronischen Benutzergeräts (120), festgestellt hat, dass ein drahtloses Link mit dem zuvor gepaarten elektronischen Benutzergerät verfügbar ist;
wobei das Erkennen einer Aktion das Erkennen umfasst, ob sich der Deckel in einer ersten Position oder einer zweiten Position befindet.

10. Nichtflüchtiges computerlesbares Medium, welches ausführbare Anweisungen umfasst, die, wenn von einem Prozessor auf einer Aerosolerzeugungsvorrichtung (100) ausgeführt, bewirken, dass die Aerosolerzeugungsvorrichtung Schritte durchführt, die umfassen:
Erkennen einer von einem Benutzer durchgeführten Aktion, welche die Manipulation eines Deckels (106) der Aerosolerzeugungsvorrichtung involviert, um der Aerosolerzeugungsvorrichtung zu ermöglichen, ein Verbrauchsmaterial aufzunehmen, das die aerosolbildende Substanz umfasst; und
Triggern, als Reaktion auf das Erkennen der Aktion, dass die drahtlose Kommunikationsschnittstelle, nach einem drahtlosen Link, mit einem zuvor gepaarten elektronischen Benutzergerät, sucht;
Ermöglichen (230) der Erzeugung des Aerosols, wenn eine drahtlose Kommunikationsschnittstelle (118) durch die Suche, auf Basis des Empfangs einer MAC-Adresse eines zuvor gepaarten elektronischen Benutzergeräts (120), festgestellt hat, dass ein drahtloses Link mit dem zuvor gepaarten elektronischen Benutzergerät verfügbar ist;
wobei das Erkennen einer Aktion das Erkennen umfasst, ob sich der Deckel in einer ersten Position oder einer zweiten Position befindet.

## Revendications

1. Un dispositif de génération d'un aérosol (100) qui est configuré pour utiliser une substance de formation d'un aérosol pour produire un aérosol qu'inhale un utilisateur et qui se compose des éléments suivants :
une interface de communication sans fil (118) qui est configurée pour communiquer sans fil avec un dispositif électronique préalablement couplé de l'utilisateur (120)
un contrôleur (122) qui est configuré pour permettre la production d'un aérosol lorsque l'interface de communication sans fil a confirmé, par le biais d'une recherche et sur la base de la réception d'une adresse MAC du dispositif électronique préalablement couplé de l'utilisateur, qu'une liaison sans fil avec le dispositif électronique préalablement couplé de l'utilisateur est disponible
une chambre (104) de réception d'un produit consommable qui contient la substance de formation d'un aérosol
un couvercle (106) qui est configuré pour passer d'une première position, durant laquelle la chambre et fermée par le couvercle, à une deuxième position, durant laquelle la chambre est ouverte, et
un capteur (110) qui est configuré pour détecter une action réalisée par l'utilisateur et portant sur la manipulation du couvercle pour permettre au dispositif de génération d'un aérosol de recevoir le produit consommable,
et l'interface de communication sans fil est configurée, à la suite de la détection de cette action, pour lancer la recherche d'une liaison sans fil avec le dispositif électronique préalablement couplé de l'utilisateur, et
ce capteur est configuré pour détecter si le couvercle occupe la première ou la deuxième position.

2. Le dispositif de génération d'un aérosol que décrit l'une ou l'autre des revendications précédentes, si ce n'est que le contrôleur est configuré pour permettre la production d'un aérosol pendant une durée prédéterminée lorsque l'interface de communication sans fil a confirmé qu'une liaison sans fil avec le dispositif électronique préalablement couplé au dispositif électronique de l'utilisateur est disponible.

3. Le dispositif de génération d'un aérosol que décrit l'une ou l'autre des revendications précédentes, si ce n'est qu'il comporte, en outre, un dispositif de saisie (116) qui est configuré pour être activé par l'utilisateur pour lancer la production d'un aérosol.

4. Le dispositif de génération d'un aérosol que décrit la revendication 3, si ce n'est que le contrôleur est configuré pour détecter une activation du dispositif de saisie et, si la production d'un aérosol n'a pas été lancée, pour déclencher, à la suite de la détection de cette activation, la recherche par l'interface de communication sans fil d'une liaison sans fil avec le dispositif électronique préalablement couplé de l'utilisateur.

5. Le dispositif de génération d'un aérosol que décrit l'une ou l'autre des revendications précédentes, si ce n'est qu'il comporte, en outre, un indicateur (112) qui est configuré pour indiquer à l'utilisateur le statut du dispositif de génération d'un aérosol.

6. Le dispositif de génération d'un aérosol que décrit l'une ou l'autre des revendications précédentes, si ce n'est que l'interface de communication sans fil est une interface Bluetooth.

7. Le dispositif de génération d'un aérosol que décrit l'une ou l'autre des revendications précédentes, si ce n'est que le capteur est configuré pour détecter le déplacement du couvercle vers la première position, et si ce n'est, lorsque le capteur a ainsi détecté ce déplacement vers la première position, que l'interface de communication sans fil est désactivée.

8. Le dispositif de génération d'un aérosol que décrit l'une ou l'autre des revendications précédentes, si ce n'est que la chambre est configurée pour recevoir un produit consommable se présentant sous la forme d'une tige contenant du tabac, et si ce n'est que le dispositif de génération d'un aérosol comporte, en outre, un élément de chauffage qui est configuré pour chauffer ce produit consommable à l'intérieur de la chambre.

9. Un procédé d'exploitation d'un dispositif de génération d'un aérosol afin d'utiliser une substance de formation d'un aérosol pour produire un aérosol qu'inhale un utilisateur et qui se compose des étapes suivantes :
détection d'une action réalisée par l'utilisateur et impliquant la manipulation d'un couvercle (106) du dispositif de génération d'un aérosol afin de permettre à ce dispositif de génération d'un aérosol de recevoir un produit consommable contenant la substance de formation d'un aérosol et
déclenchement, à la suite de la détection de cette action, de la recherche par l'interface de communication sans fil d'une liaison sans fil avec le dispositif électronique préalablement couplé de l'utilisateur
activation (230) de la production d'un aérosol lorsque l'interface de communication sans fil (118) a confirmé, par le biais d'une recherche et sur la base de la réception d'une adresse MAC du dispositif électronique préalablement couplé de l'utilisateur (120), qu'une liaison sans fil avec le dispositif électronique préalablement couplé de l'utilisateur est disponible
et cette détection d'une action consiste, entre autre, à détecter si le couvercle occupe la première ou la deuxième position.

10. Un support électronique non transitoire qui contient des instructions exécutables qui, lorsqu'elles sont exécutées par un processeur implanté dans un dispositif de génération d'un aérosol (100), entraîne la réalisation des opérations suivantes par ce dispositif de génération d'un aérosol :
détection d'une action réalisée par un utilisateur et impliquant la manipulation d'un couvercle (106) du dispositif de génération d'un aérosol afin de permettre à ce dispositif de génération d'un aérosol de recevoir un produit consommable contenant la substance de formation d'un aérosol et
déclenchement, à la suite de la détection de cette action, de la recherche par l'interface de communication sans fil d'une liaison sans fil avec le dispositif électronique préalablement couplé de l'utilisateur
activation (230) de la production d'un aérosol lorsque l'interface de communication sans fil (118) a confirmé, par le biais d'une recherche et sur la base de la réception d'une adresse MAC du dispositif électronique préalablement couplé de l'utilisateur (120), qu'une liaison sans fil avec le dispositif électronique préalablement couplé de l'utilisateur est disponible
et cette détection d'une action consiste, entre autre, à détecter si le couvercle occupe la première ou la deuxième position.
